# EUROPEAN PATENT APPLICATION

(11) **EP 4 257 922 A1**
(43) Date of publication of application: **11.10.2023**
(21) Application number: 22166681.1
(22) Date of filing: 05.04.2022
(51) Int. Cl.: G01C 15/00, G01S 17/42, G06V 20/64

(54) **OPTOELECTRONIC MEASURING DEVICE HAVING SCANNING FUNCTIONALITY**

(71) Applicant: Hexagon Technology Center GmbH, 9435 Heerbrugg (CH)
(72) Inventor: METZLER, Bernhard, A-6850 Dornbirn (AT)
(74) Representative: Kaminski Harmann

(57) **Abstract**

Scanning method and scanning device (1) for automatic scan point reduction, wherein a number of scan points (2) are generated optoelectronically by detection of a measuring beam (103), in particular of a laser scanner or total station, with which objects' surfaces are sampled point-by-point, the scan points (2) representing spatial positions of sampled surface points. The method comprises automatically reducing the generated number of scan points (2) during the optoelectronic scanning by discarding of scan points (2d), whereby the reduction of scan points (2) is object and/or shape type-specific, whereby object type respectively shape type refers to the kind of object (10, 11, 12) respectively shape (20).

## Description

The invention relates to an optoelectronic measuring device having scanning functionality according to the preamble of Claim 1 and an optoelectronic measuring method according to the preamble of Claim 7.

Optoelectronic measuring devices having scanning functionality, using which a position is determined based on optical radiation, are known in manifold forms. Examples are geodetic measuring devices such as total stations or multi-stations -for example total stations- and laser scanners such as the Leica P20 or Leica Multistation 50 which are used to measure and/or produce 3D coordinates of surfaces, or laser scanners for geodetic or industrial measuring purposes. 3D scanning is a very effective technology for producing millions of spatial measurement points of objects within minutes or seconds. Typical measuring tasks are the recording of objects' surfaces such as gear wheels, wings, ships, or aircraft, or of objects such as industrial plants, house façades, or historical buildings, but also accident locations and crime scenes. For this purpose, they have to be capable of guiding the measuring beam of a distance measuring device over a surface and simultaneously acquiring direction and distance in relation to the measurement point. A so-called 3D point cloud is generated from the distance and the direction information correlated therewith for each point by means of data processing.

Such measuring devices have for this purpose at least one radiation source for generating optical measuring radiation, often laser radiation, and optical means such as lenses, prisms, mirrors, light-guiding fibers, or collimators, by means of which the generated measuring radiation can be emitted in free space onto a target to be measured, because of which these devices are also referred to as so-called free beam sensors. Optical measuring radiation is understood in this case as electromagnetic radiation, not only in the visible range of the spectrum, but also radiation in the ultraviolet, in the infrared, and in the terahertz range. Optoelectronic measuring devices are known which use measuring radiation having a wavelength of 405 nm, 532 nm, 635 nm, 650-690 nm, 780 nm or 785 nm, 795 nm, 808-850 nm, 905 nm, 980 nm, 1064 nm, or between 1500 and 1570 nm.

Furthermore, such a device has a beam deflection unit, by means of which the measuring radiation can be pivoted or swiveled around at least one axis, usually two axes aligned perpendicularly to one another, for example, a vertical and horizontal axis. The beam deflector can be implemented in the form of a moving mirror or alternatively also by other elements suitable for the controlled angle deflection of optical radiation, for example, rotatable prisms, movable light guides, deformable optical components, etc.

The target to be measured is, for example, a point of a surface of a natural object. The irradiated target reflects measuring radiation in a diffuse or oriented manner, so that at least a part of the measuring radiation is reflected back to the measuring device. The measuring device has an optoelectronic sensor, which is designed for at least time-resolved detection of the measuring radiation, for example, an APD diode, an SPAD array, or an array of SPAD arrays. The desired measured variable, for example, a distance and direction value and/or a 2D/3D coordinate, is determined on the basis of the detected measuring radiation. Various measuring principles are available for this purpose, for example, a runtime measurement (time-of-flight, TOF), which determines the runtimes of individual laser pulses and therefrom from - with knowledge of the speed of light - the distance from the target object, or for instance interferometric measurement principles.

In any case, a plurality of surface points of the target object is sampled in succession by the pivoting, whereby, for example, an item of 3D information about the object as a whole can be obtained and/or a 3D image of the measuring environment is produced. The measurement is usually performed with determination of distance and angles, i.e., in spherical coordinates, which can also be transformed into Cartesian coordinates for display and further processing.

For rapid and accurate scanners, in particular a short measuring time is required with high measurement accuracy at the same time, for example, a distance accuracy in the millimeter range or less at measuring times of the individual points in the range of sub-microseconds to milliseconds. The measuring range extends in this case from a few centimeters up to several kilometers. The spatial measuring resolution is of particular significance in this case. It determines which details can still be recognized, but also the duration of the scanning procedure and the quantity of data arising in this case. Measuring projects using modern high-speed scanners produce 3D point clouds having a strength of, for example, several hundred million or several billion object points and above.

In the case of scanning processes according to the prior art, however, it is by contrast usually the case that the acquired volume of data is unnecessarily large which due to the very high number of scan points means "inflated" data storage and transition times.

The prior art discloses a multiplicity of methods by which in post-processing, after conclusion of the measurement and using external powerful computers, the data of the 3D point cloud can be reduced, e.g. by filtering, smoothing or interpolation. It is disadvantageous that superfluous data has to be stored until then and processed, such that e.g. the requirements made of the data processing capacities of the surveying apparatus or the time expenditure for data transfer and processing until the conclusion of post-processing still remain very stringent.

By contrast, WO 2013/12826 discloses a method for a stationary laser scanner for data handling in real time, i.e. actually during data recording in the course of scanning. This involves carrying out, in the course of the scan, an areal segmentation of the 3D raw data into individual layers with a lattice structure passing through the layers for a respectively separate coding of the measurement components distance to the surface point, (both) alignment angles of the measurement beam and intensity of the received measurement radiation. For the intensity, the disclosure of WO 2013/12826 considers a compression of the data, which is associated with a partial loss of information or precision. By contrast, the disclosure of WO 2013/12826 explicitly teaches that the compression of the further components (distance, angles) is effected without loss of information or precision, as e.g. in the case of a compression based on a ZIP algorithm. In other words what is carried out (with the exception of the data concerning the intensity) is lossless storage of the data and hence no reduction of the data in the actual sense. That is to say that, disadvantageously, inherently unnecessary or undesired data are not sorted out, rather the volume of data to be stored or transferred is merely reduced by skillful organization and compression of the data. Sorting out scanned points is disclosed in WO 2013/12826 only for the case where the scanning speed is not optimally coordinated with the segmentation of the data, such that without sorting out the data organization structure would be disturbed, e.g. if a line of the structure lattice were otherwise filled doubly on account of an excessively low scanning speed. The scan data are thus adapted to the lattice structure serving for data segmentation, while the lattice structure remains strictly fixed. Apart from this exception, i.e. in the case of an optimum or error-free scan, the final data of the 3D points that are stored in the read only memory correspond to the directly recorded point data in terms of contents.

EP 3 091 333 B1 also relates to a method for scan data processing during scanning/on site. The recorded point set of the scan points is kept available in a volatile memory of a measuring device such as a laser scanner and -as part of the scanning process- an adaptation, in particular a reduction, of the recorded point set is effected depending on point density of the recorded point set. Only the adapted point set generated thereby, with loss of the original recorded point set, is stored in a permanent memory. The problem to be solved therewith is that due to a continuous change in the alignment of the measurement beam is effected with, equal steps for scanning, the distance between the scan points, i.e. the point density, is dependent on the measuring distance (and also on the alignment of a scanned object with respect to the surveying apparatus). The point density actually achieved is not uniform but thus varies with the distance. It is high(er) for near objects. However, in the near region, which is very close to the laser scanner, the point density is generally particularly high, wherein such a region is at the same time generally of little interest for the surveying task, since in particular the ground on which the scanner is situated normally needs actually not to be scanned. According to the teaching of EP 3 091 333 B1, preferably the point density itself is reduced by thinning out and/or averaging of scan points, within at least one predetermined partial region of the scanning region in accordance with predetermined selection criteria. Such a subregion is a region in or around the nadir of a laser scanner, for example within an angle +30° to -30° and such a selection criterion is a pre-defined maximum value for the point density.

However, the method of the EP 3 091 333 B1 which is based on scan point density and thus implicitly on measurement distance does not discern between objects of interest and objects of little or no interest. For example, when excessively increased point densities in the ground region of the laser scanner are avoided by the point density being hugely thinned out by erasure of scan points in the near region, even scan points of an object in this region which indeed is of particular interest will be sorted out. Said otherwise, scan points may be lost which rather should be preserved. On the other side, there still can be lots of scan points which are of little or no relevance -for instance of objects which rather need not to be scanned as they are e.g. not relevant for the specific measurement task and/or accidentally (moving) in the scanner's field of view. This objects are scanned like all objects in the FOV and when such objects are scanned with a point density not above a predefined maximum value (as they are situated e.g. not near the scanner) no point reduction is effected, i.e. the scan points all are kept.

Whilst the first problem is partly relieved by the EP 3 091 333 B1 in further developments with more sophisticated point reduction by consideration of an information gain of a respective or individual point, whereby individual points of high information gain (which is seen in a high variance of the normal distances of object points neighboring the object point in question) are not discarded but kept even in case of a point density above a predefined maximum value, the second problem of still many irrelevant points not only remains in such further developments, but is even increased: for instance scan points of a meaningless object like a tree (irrelevant for a measurement task like outdoor scanning of manmade objects) but with a highly variant surface not only are not disregarded or at least thinned out but -according to the high, purely nominal information gain- are kept in high number or in view of the general point reduction rule of EP 3 091 333 B1 in even increased or excessive number compared to other objects. Hence, though the method taught by EP 3 091 333 B1 provides a scan data reduction on-the-fly, the applied basic reliance on scan point density still produces scan data sets or point clouds with lots of superfluous scan points/scan data while showing the risk of irreversibly loosing relevant scan points.

To sum up, today in laser scanning a point cloud is generated with a pre-defined scanning resolution which is chosen according to the objects that require the highest resolution for a specific measurement task, e.g. buildings. Nevertheless, in the field of view of the laser scanner there are plenty of objects that are not relevant for the measurement task at all. Naturally, though there are methods known for data reduction, a huge amount of data is generated with measuring devices of the state of the art even on objects where the high resolution for measurement tasks is not required.

The object of the present invention is therefore to provide an improved optoelectronic measuring device having scanning functionality and such a scanning method.

It is a further object of the present invention to provide precisely such a scanning method by which the amount of finally stored scan data can be reduced on-site in a specific manner.

These objects are achieved by the implementation of the characterizing features of the independent claims. Features which refine the invention in an alternative or advantageous manner can be inferred from the dependent patent claims and the description, including the description of the figures. All embodiments of the invention which are illustrated or otherwise disclosed in this document are combinable with one another if not expressly stated otherwise.

The invention relates to an optoelectronic measuring device having scanning functionality, for example, a ground-based and/or stationary measuring device, preferably a laser scanner, a laser tracker, a profiler, or a total station. The optoelectronic measuring device generates scan points by scanning sampling of surfaces of objects and has a radiation source, preferably a laser source, for generating measuring radiation and an optical unit for emitting measuring radiation of form of a measuring beam into free space onto the objects. The emission direction of the beam is variable about at least one axis, in particular two axes perpendicular to one another. The device further comprises at least one position or angle sensor for measuring the emission direction and an optoelectronic detector for detecting measuring radiation reflected from the target object.

A control and analysis unit of the measuring device is designed for measuring a distance value for a respective scan point and for automatic reduction of the generated number of scan points with discarding of scan points.

For said automatic reduction, the control and analysis unit is designed for object and/or surface shape type-specific scan point reduction, whereby object type refers to the kind of object and surface shape type refers to the kind of shape.

In other words, there is provided a reduction of the initially recorded scan points during scanning/on-the-fly which reduction depends on the type or sort of object, the inherent nature of the scanned object i.e. the "being" of the object which is in principle independent of the measurement device, e.g. not dependent on the distance object-laser scanner (which however of course has to be a property that can be detected or observed by the device, preferably by evaluation of the scan data itself).

Or as said, alternatively or additionally to an object type-specific reduction, the reduction depends on the shape type or sort of scanned surfaces, this depending on a given (geometric) quality or property which is also in principle independent of the measurement device. Surface shape type is based on an abstraction/abstract concept of surface shape; hence, type is not to be misunderstood simply as a surface characteristic but means a genus. Surface shape type refers e.g. to the kind or category of curvature of surfaces (flat, cylindrical, wavy, meandering, ...) and/or kind or category of fragmentation or unsteadiness (rough, even, jagged, toothed, ...). The first example can be seen as a more "macroscopic" approach, looking at the "overall" geometry of a surface, its general structure, whereas the second can be seen as more "microscopic" approach, looking at the geometric detail, its fine structure. Both such approaches can also be combined, e.g. "jagged (and) meandering" and/or finer differentiation of types can be applied (e.g. very rough, medium rough, light rough III; wavy A, wavy B, wavy C, ...). However, shape type can also refer to the outline or border of a surface, so to say the type of a surface's envelope (e.g. circular/spherical, angular, ...). Generally, the shape type as such is object independent and thus can be recognized or classified for any object and depending on categories also can be classified over object boundaries.

As a preferred option, the control and analysis unit is designed for determination/recognition or generation of scan points -denoted key points- based on the set of generated scan points (of an object or of a type specified for scan point reduction) which key points together define a rough shape of a scanned object. That is, for key point determination, scan points are selected or artificially generated based on real scan points (e.g. artificially generated as a computed center point of a number, e.g. five, ten or 100 -the number can be predefined/fixed or variable-, of scanned points is determined as key point) that sufficiently describe roughly the form or dimensions (height, length, width, diameter,...) of an object whereby scan points not being such key points can be discarded.

Thereby, how "sufficiently" is defined or how much the shape can be coarsened by the data reduction -thereby influencing the resulting number of key points- can optionally be tuned by an operator before start of the scan, e.g. by selecting out of a number of pre-defined settings such as "very rough", "rough", "medium", etc. The extent of shape conservation can depend on the object or shape type, too, that is, for example for two objects of similar shape but different type, the shape of the first object is preserved with more detail than for the second one (or in case of shape type-reduction, two similar shapes but different object type can be differently treated).

For instance, for an object such as a tree of the type "vegetation", only a rough shape preservation and only few key points may be sufficient which indicate height of the tree, diameter of the crown and perhaps diameter of the trunk, whereas further scan points are discarded though a tree typically is highly structured with many changes in shape, curvatures, edges and discontinuities. However, with the reduction being based on the type of object, not fundamentally relying on the structure, it is recognized that losing (most of) the information about this fine structure is no disadvantage.

In case of object type specific scan point reduction, any relevancy of scan data is rooted in object type, not object structure. The basic criterion for decision if a generated scan point is kept or not, object structure is at most a secondary point selection criterion within the frame of an object type or on top of the object-type selection. For example, for two object types of same relevancy according to their type whereby the first object type is known to be generally of low structure, a higher degree of reduction is preset than for the second object type known to generally have a fine structure.

As another option, the control and analysis unit comprises information about object or shape classes for defining object or shape types, whereby for each object or shape class it is pre-defined if scan points are to be reduced. As another option, the extent of reduction is pre-defined. For example, object class "building" is tagged and treated as "no reduction", class "road" tagged "low reduction" and class "tree" tagged "high reduction". As another example, shape type "wavy" is tagged "no reduction" and class "rumpled" tagged "reduction".

As a still further option, some or all pre-definitions are amendable and/or selectable from a set of multiple pre-definitions by user input through a user interface of or connected to the measuring device. Thus for instance, if in a special measurement task objects have to be measured which belong to one or more types which are normally are defined as of low relevance and hence strong point reduction, the user can change the relevance of this object or shape type(s) to "high" or the according point reduction to "low".

Alternatively or additionally, the control and analysis unit is designed to determine object or shape type specific meta-information for a respective preserved scan point or a set of preserved scan points for a sampled object of a type specified for scan point reduction and to store the information together with the according scan point or set of scan points.

As a preferred option, the control and analysis unit executes the object or shape type-specific scan point reduction based on a machine-learning algorithm, in particular a neural network/deep learning designed for the object and/or shape type-specific scan point reduction. For example, such an algorithm is trained on different object and/or surface shape classes with degrees of scan point reduction to be applied class specific wise.

Preferably, such a neural network is configured to consider for the reduction information about intensity of the detected measurement radiation and/or about the emission direction and/or information drawn from scan points adjacent to a scan point to be decided upon and/or to use multi-class semantic segmentation for scan point selection.

Preferably, the number of scan points remains unreduced for objects or shapes of a type not specified for scan point reduction, either explicitly denoted as an object or shape type which must not be reduced, as e.g. described above, or not belonging to any object or shape type specified for reduction.

As another preferred option, generated scan points are buffered in a buffer/volatile storage of the control and analysis unit or measuring device prior to selection and only selected scan points are stored in a permanent storage. As still another preferred option, the control and analysis unit is designed to carry out the scan point selection successively as soon as a predetermined number of scan points or lines of scan points is generated, that is even before the scan as such is finished.

The subject matter of the present invention is moreover a method for automatic scan point reduction, wherein a number of scan points are generated optoelectronically by detection of a measuring beam with which objects' surfaces are sampled point-by-point, in particular following a pre-defined scanning grid and/or in the field of industrial or geodetic measuring, for instance using a ground based laser scanner or total station. The scan points represent spatial positions of sampled surface points.

The method comprises automatically reducing the generated number of scan points during the optoelectronic scanning with determining of scan points to be kept/permanently stored and discarding of other scan points, whereby this reduction of scan points is object and/or shape type-specific, whereby object type respectively shape type refers to the kind of object respectively shape.

Preferably, the reduction is based solely on scanning data of the generated scan points. That is, no other data than the data generated by the scanning process (point-by-point sampling) is relied upon or evaluated, for example no camera image is used for determining object or shape type.

Alternatively or additionally, reducing the number of already generated scan points on-the-fly is done during the scanning, in particular using a moving window in the reduction procedure.

As another preferred option, the method comprises selecting or generating above mentioned key points out of the set of generated scan points of an object or shape of a type specified for scan point reduction which key points together define a rough shape (of the object), in particular whereby the key points are determined by a neural network.

As a further development, the method comprises mapping distance and intensity value of generated scan points onto a raster image depending on the horizontal and vertical angle, inputting the raster image into a neural network, using the neural network for classifying pixels as point element to be permanently stored or discard point element and using the classified pixels as output of the neural network for subsequently classifying scan points according to the respective pixel. Thereby, the neural network is optionally based on an architecture for semantic segmentation applied to images, in particular SegNet, Mask R-CNN, U-Net, etc... In particular, the method comprises mapping distance and intensity value of generated scan points onto a raster image, inputting the matrix into a neural network, using the neural network for classifying pixels as key point element or no key point element and using the classified pixels as output of the neural network for subsequently determining scan points as key points according to the respective key point pixel.

As another further development, coordinate and intensity value of scan points are directly input into a neural network, the neural network being configured to directly output the kept scan points and/or key points, wherein optionally the neural network is based on an architecture for semantic segmentation applied to point clouds such as PointNet, PointCNN, KPconv, etc.

Optionally, for a respective preserved scan point or a set of scan points to be permanently stored, in particular key points, meta-information is determined and stored, the information indicating or describing an original scan point density and/or distribution. Alternatively or additionally, the information relates to an object type and/or object surface structure of the object which the scan point or set of scan points represent, and/or whereby where the meta-information is an embedding vector generated by a neural network whereby as a further option for each key point an embedding vector is generated and stored.

As another alternative or addition, the (meta-)information describes the neighborhood of a selected/stored scan point and is derived from adjacent scan points including said discarded scan points. In other words, an embedding of a scan point to be permanently stored, in particular key point, by its adjacent generated scan points (i.e. including discarded scan points), is calculated and stored in association with the (key) point. Optionally, thereby a shape of an original point cloud in the surroundings of the preserved scan point is described therewith, and/or the information is stored in form of a descriptor.

In a further development, in a post-processing step, for an object with reduced number of scan points, additional virtual scan points as substitutes for at least some of the discarded generated/original scan points are generated based on said key points and said meta-information in such a way that either a point cloud with a uniform scan point density and/or distribution is established (or rather re-established if originally present), and/or a virtual surface structure of the object which the scan points represent is created, emulating a real surface structure of the object or according object type. As a further option, the meta-information is an embedding vector assigned to a key point and virtual scan points in the vicinity are generated based on the embedding vector.

For the computation of the meta-information a neural network, in particular an encoder network can be applied. Based on the points in a defined surrounding around the key point the encorder network generates an embedding vector that represents the shape/form of the point cloud around the key point.

For the computation of the virtual scan points a neural network, in particular a decoder network can be applied. Based on the embedding vector the decoder network generates virtual scan points in a defined surrounding around the key point.

Said otherwise, as an optional additional post-scanning step, starting from the reduced point cloud or scan point set, the reduction is virtually undone at least with regard to some properties of the point cloud or scanned and reduced objects by artificial replacements of scan points, whereby the generation of the virtual scan points can be object type and/or shape type-specific. As original scan data/points are permanently lost by the previous reduction procedure, this is no exact reproduction but an "as-if" reproduction that imitates the original.

Thereby, this pseudo-reconstruction is founded in real data by being based on the key points and the according meta-information, the latter can be seen as a lossy compression of scan data relating to the scan points and allowing for a more sophisticated or realistic filling between the key points compared e.g. to a simple linear interpolation between key points. Thereby as an option, meta-information describing a quality of a key point, e.g. compared to other key points with respect to a reconstruction can be produced and stored.

The present invention furthermore includes a computer program or computer data signal, embodied by an electromagnetic wave, having program code for controlling and/or carrying out the method according to the invention, in particular when the program is executed in a control and analysis unit of a measuring device according to the invention.

The present invention relating to terrestrial laser scanning, airborne laser scanning, mobile mapping, etc. provides the advantage of reducing the data during scanning depending on the object type and/or surface shape type wherein only a subset of the complete original data or a reduced scan point set is stored on the scanner. Hence, demands on data storage and transmission are significantly lowered whereby it is assured that no relevant data is lost. As data reduction is coupled to the object and/or surface shape type and therewith importance for the measuring task, an object/shape and therewith relevance specific fashion or degree of data reduction is provided. Objects and/or surface shapes are advantageously discerned by typecasting and a point reduction is specific for the respective types.

The present so to say holistic approach wherein related scan points are recognized as a group, as belonging together or as representing an entirety/collective (object resp. surface shape), enables a point treatment/reduction adapted to the individual objects or surface shapes present in the scan. The concept of using object and/or surface shape types allows for point reduction decoupled of the single, individual measurement values/scan points as such or point reduction independent of a general point density. Said otherwise, the present invention detaches the decision reduction - no reduction (keep point - discard point) from primitive or simple consideration of pure geometric point relationships (e.g. point density or point distances) to a higher ("cognitive") level considering the meaning of a scan point assembly, the assembly representing an object or surface shape, then associated to a certain type. For each object and/or surface shape type, the degree of point reduction (including no reduction at all) can be individually and independently defined. This is an important improvement compared to the general point reduction rules as known in the art which are not able to discriminate with respect to relevancy or significance of an object or surface.

The further concept of key points further allows to ensure that even for objects or shapes of a low relevance type where many scan points are discarded and only few points are permanently stored, a further discrimination with respect to relevancy is provided in that those scan points are considered which preserve basic knowledge to some extent about a (object) shape/(object) form.

The key point-concept is even further advantageous in further developed embodiments including a look-alike reconstruction step. This further development of the present invention not only provides the advantage of a scan point or scan data reduction which is tailored or specific with respect to relevancy of a measured object/shape, but in addition provides a scan data set or point cloud afterwards which enables a handling or processing of the reduced scan data as if it was not reduced. In particular, conventional software for displaying the scan data and/or for post processing can still be used. Hence, in particular by using said key points, the benefits of the inventive data reduction has not to be a trade off with limitations on further processing of the data set but a reconstructed point cloud according to the invention can be used and processed like conventional point clouds. That is, after transferring the data to an office software, a reconstruction of the objects is performed whereas the appearance (point density, distribution, structure, etc.) is similar to the original scanning data.

The measuring device according to the invention and the method according to the invention will be described in greater detail hereafter on the basis of the embodiments and application procedures schematically illustrated in the drawings.

In the specific figures:
- Figure 1: shows a measuring device as known in the art,
- Figure 2: shows schematically a first example of a scanning method according to the invention,
- Figure 3: shows in resemblance to figure 1 in pure schematic illustration a reduced set of scan points,
- Figure 4: shows another examplary scheme of the method according to the invention,
- Figure 5: illustrates still another examplary scheme,
- Figures 6a-d: illustrate a further development of the inventive method,
- Figures 7a,b: illustrate another further development of the method,
- Figures 8a,b: additionally illustrate such an further development of the method, and
- Figure 9: shows schematically an example for generation and storage of the aforementioned meta-information.

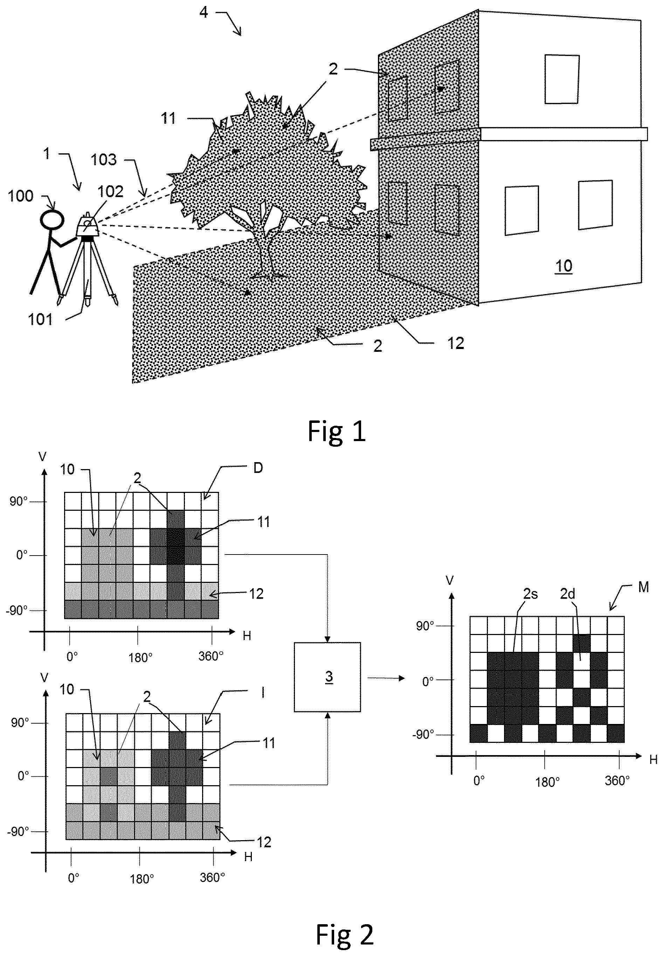

Figure 1 shows an exemplary stationary measuring device 1 as known in the art, for example a laser scanner, laser tracker or total station, having a scanning functionality for recording or sampling surfaces of objects 10, 11, 12. The device 1 has for instance an intensity-modulated, in particular pulsed, radiation source, for example, a laser source, and an optical unit, so that a measuring beam 103 can be emitted into free space and onto objects 10-12. The emission direction defines a measuring axis and the respective present direction of the emission or the measuring axis is measured by one or more position/angle detectors. The optical unit is embodied, for example, as a combined emitting and receiving optical unit or has in each case a separate emitting optical unit and receiving optical unit. In any case, measurement light reflected from objects 10-12 is received by the measuring device 1 and acquired by an optoelectronic detector. In this case, for example, up to a million or more light pulses per second and thus sampling points 2 can be generated, which sampling or scan points 2 are indicated in the figure by the dotted pattern. All scan points 2 normally are stored together as a 3D-point cloud.

To measure the distance value to a sampled object point 2, the optoelectronic measuring device 1 has a control and analysis unit or electronic controller, which comprises an analysis functionality for measuring the respective distance value, e.g. according to the runtime principle (analysis according to the time-of-flight method), based on a number n≥=1 (n is an integer) of reflected and detected light emissions, for example light pulses or light pulse sequences. Individual object points 2 are thus sampled, wherein the respective distance to the object point 2 and the respective alignment of the measurement beam 103 in relation to two measurement axes or two angles are determined. The scanning process thus produces a point set containing three-dimensional information about the surface of the scanned objects 10-12.

In addition to the distance measured value, preferably a brightness or intensity value is recorded. The brightness can be a grayscale value, which is determined, for example, by integration of the bandpass-filtered and amplified measuring radiation over a measuring period associated with the sampled scan point 2.

A pivoting is performed in the example by means of a beam deflector, as shown, for example, by an upper part 102 of the measuring device 1 being rotated step-by-step or continuously in relation to a base 101 - relatively slowly - around a first, vertical axis, so that the measuring radiation 103 is pivoted in the horizontal and the plurality of emission directions differ from one another in the horizontal alignment, and in that a pivotable optical component, for example, a pivoting or rotating mirror, is rotated - relatively rapidly - about a horizontal axis, so that the measuring radiation 103 is pivoted in the vertical and the plurality of emission directions additionally differ from one another in the vertical alignment. The surfaces of objects 10-12 is thus scanned line-by-line. The scanning can take place within a predetermined angle range, the boundaries of which are defined by a horizontal and vertical pivoting width. The angle range in the horizontal is preferably 360°, i.e., a complete revolution about the vertical axis, and in the vertical is, for example, 270°, so that a spherical range is provided, which depicts almost the entire surrounding range in all spatial directions. However, arbitrary other angle ranges are also possible.

Thus, for the scanning sampling, the measuring emission direction is progressively pivoted, for example with a fast vertical axis and a slow horizontal axis, and in each case at least one measured value per scanning point 2 is successively recorded at short time intervals, among them in any case a distance value to the respective scanning point 2, so that a plurality of measurement directions associated with a respective scanning point 2 is provided and form a scanning grid from a plurality of scanning points 2.

In the case of surveying systems 1 of the prior art, the continuous change in the alignment of the measurement beam 103 is effected with equal steps, wherein the step size may be predefinable e.g. by the user 100 (within certain limits), for example by said user 100 defining a desired point density, e.g. that a spatial resolution, i.e. a distance a between the scan points 2, of 1 cm at a distance of 30 m is intended to be achieved. The control and evaluation unit derives the required angular step sizes from these stipulations.

Hence, a uniform scanning grid is used for sampling the environment which in the figure is indicated by the uniform dot pattern on all objects 10-12 or said otherwise a uniform point cloud 4 (of course, a uniform angular step size results in a scan point density or distance on an object's surface which depends on the distance between scanner 1 and object 10-12, i.e. the farther the object is, the more the scan points are spaced to each other; seen the other way round, all objects/surface at same measurement radius show the same scan point density or spacing).

As said, modern scanners 1 produce point clouds 4 with millions of scan points 2 or a dense covering of object's surfaces. Thus, a very precise digital 3D-representation of objects is generated. Accordingly, the amount of data which is to be treated and stored is immense.

However, this dense sampling and the resulting large number of scan points or amount of data is mandatory only for objects which are actually to be measured, in the example the building 10. Due to the described procedure, often many other objects are measured likewise, too, such as tree 11 or the ground area 12, which are of no or at best little interest. That is, the generated scan points 2 comprise many scan points 2 which are of no relevance for the actual measurement tasks. Accordingly, a non-negligible part of the scan data is indeed not needed. Nonetheless, with known measurement devices with completely uniform scanning methods, sampling all objects with same (and high) resolution, this superfluous amount of data is treated and stored in the same way as the relevant data. Therefore, point clouds provided by scanners or scanning procedures of the state of the art comprise data ballast which bloats processing time and storage needed.

Fig. 2 shows schematically a first example of a scanning method according to the invention, the method being executed by a control and analyzing unit of an optoelectronic measuring device designed for scanning. This control and analysis unit of the measuring device is designed in such a way that the scan points 2 generated in principle as known in the art as described above are kept in a buffer or volatile storage of the device and a selection is made therefrom before permanent storage, hence, only a reduced set of scan points is stored.

According to the invention, the selection is object type-specific and/or shape type-specific. That is, the decision if a scan point 2 generated by the optoelectronic sampling is selected or discarded is based on the type of object and/or the shape of the surface the scan point 2 is taken from. The relevancy of the laser scanner measurements with respect to the measurement task is classified during the scanning process and only scan points 2 with a high relevancy are permanently stored whereby relevancy is depending upon the category or sort of object and/or shape scanned. In other words, the scanner still captures the data with the pre-defined scanning resolution, but dependent on the number/presence of objects and/or surface shapes of low relevancy only a reduced set of points 2 is stored which leads advantageously to data reduction.

Thereby type, category or sort of object resp. shape is to be understood as relating to an immanent property of the object resp. surface, an expression of its intrinsic nature. In the case of discrimination according to object type, relevancy is decided upon the category of object and therewith an associated meaning or significance of an object, e.g. in case of outdoor scanning, a tree (or more generally vegetation) has low significance in contrast to a building having high significance. On the other hand, discrimination according to surface shape type looks at the category of surface shape, hence is based on a geometric property of surfaces, therewith type casting as for instance one of "even, flat, bend, uniform, scrappy, irregular/patchy", which is in principle neither bound/limited to a single object nor related to or dependent on recognition of objects as such. Both approaches can optionally be combined, for example -but not limited to- as a two step method by first determining object type, determining objects of relatively low importance/designated for point reduction, and determining shape type of each of said objects and specifying a respective degree of reduction according to the shape type.

In the scheme depicted in fig. 2, the reduction is carried out using machine learning, in particular by a neural network 3. Input of the neural network are the distance value D and intensity value I of a respective generated scan point 2. In the example, the distance values D and the intensity values I of the scanner measurements are mapped according to their horizontal angle H and vertical angle V onto a raster image, where the row index corresponds to the vertical angle V and the column index corresponds to the horizontal index H. This raster image can be interpreted as image with two channels and is input to the neural network 3, in particular a convolutional neural network (CNN), that processes the data and classifies each element/pixel of the raster image M into a point to be selected 2s or a point to be discarded 2d whereby the neural network is designed or trained to consider the kind of object a scan point relates to for classifying.

In the example, the three objects 10-12 of fig. 1 are schematically represented in the images (ground 12 on the bottom, building 10 on the left side and tree 11 on the right side). For each scan point 2, the control and analysis unit resp. the neural network 3 recognizes the type of object and/or type of shape it belongs to or represents. That is, in the example it is determined that the scan points 2 on the left side relate to the type "building", the scan points 2 on the right side to type "tree" (or "vegetation") and the scan points 2 on the bottom to the type "ground". That is, the type of object (or analoguously type of surface shape) is recognized as such, either explicitly by assigning a scanned object (point) to an object type/class or implicitly by considering an underlying object type directly when selecting a scan point or marking an associated matrix field whereby this consideration of object type can be based on machine learning.

Preferably and in deviation from the depiction, the processing of the scanning data runs in parallel to the scanning process and hence, the raster image M contains not all the data covering the whole 360° range of the horizontal angle. Instead, the range is reduced to the current horizontal angle with a buffer according to a defined measurement angle or scan line number, for instance a buffer of about 0.5 - 1° or, alternatively, 3 to 11 scan lines. As the scanning proceeds, the window is moving with respect to the horizontal angle.

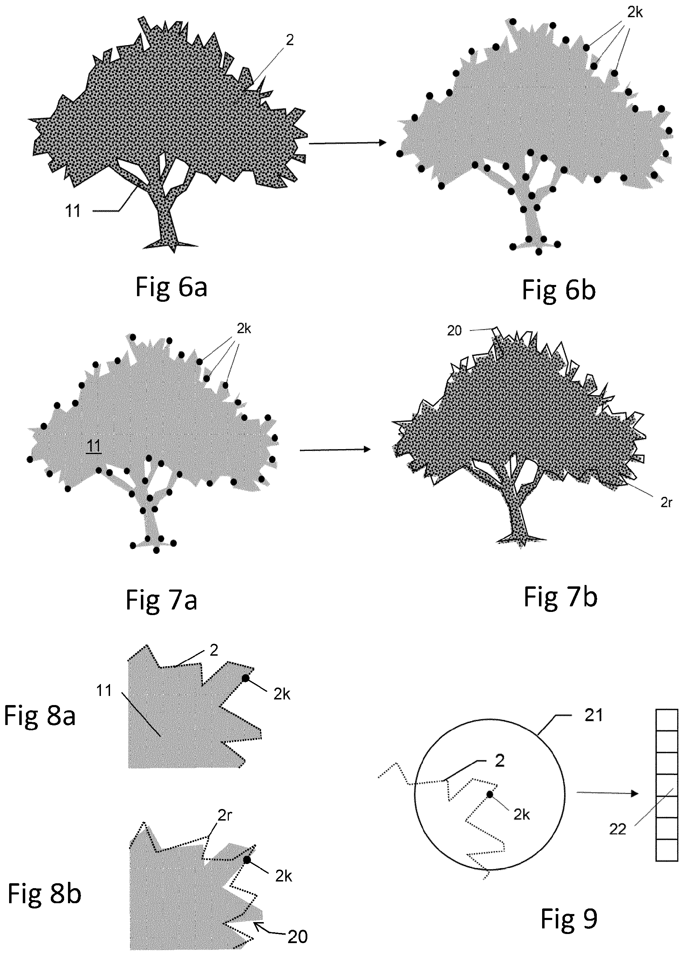

In any case, based on this object and/or surface shape typecast, the scan points 2 are differently treated in the scan point reduction process. As indicated in the raster image M on the right side of fig. 2, scan points 2 of the object type "building" (or in case of surface shape type e.g.: "flat and regularly granulated even") are all kept (all generated points 2 are classified as points 2s to be selected/permanently stored). To the contrary, out of scan points 2 relating to the type "tree" and "ground" (or shape type "bushy" resp. "flat, irregularly patterned and edgeless"), only a fraction are kept whereas the other points 2d of the original scan points 2 are abandoned as in principle all points 2 of both objects are considered as not providing important information or as no gain of relevant information. In fact, all points 2 of the tree 11 or even ground 12 could be discarded as these objects are actually not intended to be measured but only the building 10, however, generally some points 2s of unimportant objets such as tree 11 and ground 12 are nevertheless preserved to prevent large gaps or holes in the reduced point cloud. Preserving at least some points of objects or surfaces of low or no relevance can provide further benefits as desribed with respect to figures 6a-9 below.

In any case, raster image M is used as a filter or "sieve" for filtering the generated scan points 2 or initial point cloud according to the row and line resp. horizontal and vertical angle associated with a respective scan point.

As a final result, a reduced point cloud is obtained wherein the high scanning resolution e.g. up to the mm-level is preserved for building 10. However, for other objects or surfaces like tree 11 and ground 12 -for which such a high scanning resolution is not required, e.g. in most cases, for vegetation objects/vegetation surfaces the preservation of the major shape by storing a point e.g. every 10 cm is sufficient- based on the inventive concept, only a single point is stored for e.g. a 10 by 10 cm patch instead of 400 points in case the original scanning resolution on the objects or surfaces equals 5 mm. Thereby, the type of object and/or its structure can additionally or on top be considered in the point selection in that e.g. as indicated on the right side of the figure, for ground 12, having a quite simple or uniform flat surface, "stupidly" every second scan point is selected whereas for tree 11 its more detailed or inhomogeneous structure is taken into account, hence not strictly every second point is selected. Hence, for tree 11, the point reduction does not follow strictly a fixed pattern or grid of patches but e.g. edge or fringe points, representing the tree's outline/outer shape, are favored for preservation whereas inner points are relatively more discarded.

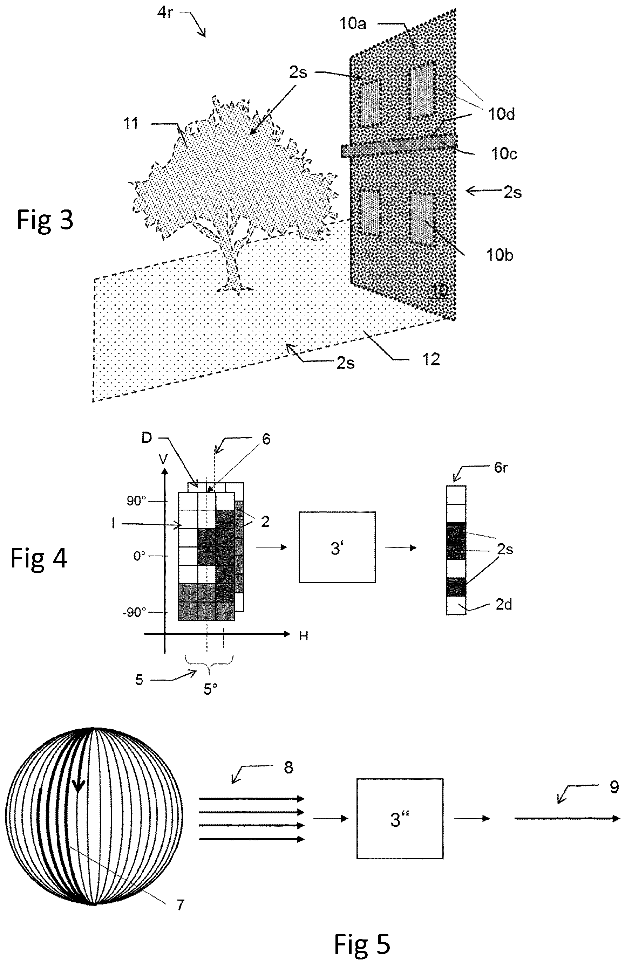

The inventive point selection leads to tremendous reduction of the data stored on the measuring device, which is schematically depicted in following exemplary figure 3.

Fig. 3 shows in resemblance to figure 1 in pure schematic illustration a reduced set of scan points 2s or 3D-point cloud 4r of the scanned objects 10-12. Due to the object-type or shape-type based point reduction, the point cloud 4r is made only from scan points 2s determined as described above. This means e.g. that for the building 10, an object of a highly relevant sort, all generated scan points 2s are preserved (indicated by the dense pattern) whereas for the objects 11 and 12 of minor relevance fewer points 2s than originally produced are stored (indicated by the lighter pattern). Said otherwise and indicated in the figure by the different dot patterns, the point cloud 4r is dense for the building 10 and sparse for the tree 11 and ground area 12.

As also indicated in figure 3, the reduction can be further differentiated with respect to object types in that the building 10 is further sub-divided in (sub-)object types such as "(flat) wall" 10a, "window" 10b and "protrusion" 10c and the point reduction is further different for these different (sub-) object types, e.g. fewer points of window 10b are selected than for protrusion 10c or wall 10a. Likewise or even further, edges 10d that are defining the dimensions like height and width of an object can be treated as separate object types of very high importance with selection of all generated or initial scan points or seen the other way round with exemption of any point reduction whereas in this case, even a part of the points of flat wall 10a could be discarded. Accordingly, surface shape types can be further differentiated by sub types.

For any kind of object typecast, designating an object type can be a separate step, i.e. the object category is first determined, e.g. based on pre-determined object classes such as "vegetation", "ground", "building", "vehicle", "installation" and so on. As already in principle mentioned above, there can also be a finer classification such as "tree", "bush", etc. and/or "building edge", "(flat) wall", "window", "road", "cable" etc. The aforementioned can analoguously applied to shape type-specfic point reduction.

As some measuring devices comprise digital (overview) cameras, too, the object or surface shape typecast can be done based on or considering a photograpic image of the objects/environment. However, preferably, the inventive method and in particular any object/shape classification or scan point selection is based on the scan data whereby a photographic image may only be taken additionally into account; but most preferably, the method relies only and completely on the data of the generated scan points 2. That is, the scan point reduction is independent of any additional data other than the scan point data itself ("autark"). The scan data thereby comprises distance, direction (vertical and horizontal angle) -or said otherwise the 3D-position- and intensity of the scan points as described above with respect to figure 2. An object and/or surface shape type therewith can be determined for instance by evaluation of positions of adjacent scan points relative to each other or their distribution as point distribution is considered as typical for a distinct sort of object.

Thereby, intensity can provide additional information in evaluation point distribution or local structure of the generated point cloud. Intensity can also be used as object type indicator in that it is an information about the reflectivity of the surface the scan point belongs to which refletivity is typical for objects, e.g. low reflectivity for asphalt and high reflectivity for metal objects. Intensity can also be used as additional information in that a degree of its variation or fluctuation e.g. from point to point or along a scan line is regarded, e.a. a high variation in a group of scan points or for a surface can for example be used as an indicator for a rough, uneven or fragmented surface shape type.

The measurement directions resp. angle to the scan point can also be used as information about the object's position relative to the measuring device as this relative position can also be an (additional) indication of object or surface shape type. For example, for a ground based scanning, trees and bushes may result in quite similar local point cloud or point structures and even point intensity, but the tree's crown is typically measured at a relatively high elevation angle or vertical measurement angle whereas a bush is scanned at a relatively low elevation angle.

The determination of object or shape type can be a separate step, e.g. in form of a classification as said above, followed by the further step of point selection based on the determined types of the scanned objects 10-12. Alternatively, there is no explicite typecast but the dependence on object or shape types is integrated in a selection procedure. For example, the neural network 3 is trained to differentiate between "relevant" scan points 2 and "irrelevant" ones according to different object types, wherefore no separate object type determination is needed but the decision making of the neural network 3 for each scan point 2 is in itself dependent on the sort of object the respective scan point 2 is representing.

The scan point reduction can be for example a multiple step procedure, e.g. in that -as said- there is first a classification of scan points 2 or a determination of scan points 2 or rather scan positions according to their importantance, followed by a subsequent step wherein the scan points in fact are selected or discarded.

Alternatively, the scan point reduction is a single step procedure, i.e. the selection is directly based on the scan point data, that is at least their 3D coordinates. Such a single step selection procedure is examplified with respect to following figure 4.

Fig.4 shows another examplary scheme of the method for object type-based scan point reduction which is similiarly applicaple to a shape type-base approach. In the example, similar to the example given in figure 2, distance data (or seen otherwise the 3D-coordinates) and intensity data D, I of a respective scan point 2 are fed into a neural network 3'. In difference to figure 2, in this example not the whole measurement/horizontal range is used at once, but data is processed piece by piece, e.g. according to a moving window 5 covering for example as indicated a range of 5° of the horizontal angle H or covering a range of three scan lines. Said otherwise, only a subset of the generated point cloud is classified.

Thereby, the selection is carried out for the scan line 6 in the middle wherein the preceding scan line(s) and following scan line(s) provide additional information about the surrounding of a scan point 2 which is used by the neural network 3' for the classification "keep" or "discard". For example, the subset to be classified is defined by the current horizontal angle H minus 0.5 - 1° or by 3 - 11 scan lines.

The architecture of neural network 3' can be based on one of the well known Neural Networks used for semantic segmentation of point clouds, e.g. PointNet++, KPconv, PointCNN, etc. As indicated in the figure, the neural network 3' has as output the reduced scan line 6r with scan poiints 2s which are preserved and scan points 2d which are removed. Thus, in this example, a single step classification or single step selection is provided wherein from the basic scan data (3D-coordinates and intensity) as direct input, the reduced scan point set is direct output; no additional step or subsampling of the original point cloud is needed.

Fig.5 illustrates another examplary scheme of scan point reduction. In this example, scan lines 7 are shown on the left side of the figure. As already mentioned, in terrestrial laser scanning a laser beam is reflected by a mirror rotating fastly about a first, horizontal axis and then slowly about a second, vertical axis. One 360° rotation about the first axis is a scan line. Since the classification of the relevant points takes place during the scanning process, a defined subset of the incoming scanning data is buffered, e.g, 100 measurements, 1 scan line, 10 scan lines, etc. and fed into an machine learning algorithm, particularly a neural network.

In this example, according to these scan lines 7, the reduction is done on the scanning data comprising a time series of horizontal angle, vertical angle, distance and intensity, or after convertion to cartesian coordinates the X-, Y-, Z-coordinate and the intensity of the laser measurement. These values are processed as time series 8, for instance fed into a Neural Network 3", in particular a Recurrent Neural Network (RNN), that processes the data and classifies each data point depending on object type. The output 9 of the RNN 3" is a time series with values 1/0 where 1 indicates that the point is an important point and needs to be stored and 0 indicates that the point is not relevant and needs not to be stored. This approach can be applied to a single scan line, i.e. a full 360° rotation, or to a set of for example 3-5 scan lines.

Figs. 6a and 6b illustrate a further development of the inventive method in a simplified 2D-view. Shown is as an examplare scanned object of a type for scan point reduction tree 11. In figure 6a, the tree 11 or rather its scanned representation as originally sampled with a set of scan points 2 or a point cloud-subset is shown.

Preferably already during scanning, the measured points 2 are processed for point selection, for instance are input to an AI-model that is determining the relevancy of the point, i.e. it classifies for each point 2 whether it needs to be stored or whether it can be omitted. Since normally for a tree 11 (shape) details, i.e. the position and orientation of individual branches and leaves is of minor or no relevance for measurement tasks, only a small subset of the original points, i.e. the selected points 2k as shown in Fig. 6b, is stored on the device which leads to data reduction.

These selected points 2k -denoted key points- are further specific in that they represent roughly the shape (silhouette) of the tree 11 in such a way that properties like the height of the tree 11 or the crown diameter are preserved. (As the exemplary figure 6b is a 2D-illustration, only key points 2k indicating a 2D-shape are depicted; of course in reality, the key points 2k define a rough 3D-shape of the object). Hence, the reduced point cloud is not resulting from an inflexible, fixed point selection like selection of every 50^{th} or 500^{th} scan point, but such that the selected points 2k sufficiently describe an approximate object's shape or appearance. Thus, for a highly structured object more key points 2k may be stored than for an object of same type with uniform surface.

However in any case as object 11 is type casted as of minor relevance, scan points are (largely) reduced though it is highly structured - which is not the case for a similarly highly structured object of a relevant type. This is likewise true for a reduction based on surface shape type: though two surface shapes may both have quite highly irregular point distribution as representation of highly structured surfaces, differences of these point distributions compared to each other (e.g. one surface showing different repeating patterns of irregularity than the other -or no pattern at all) are recognized as different surface shape types (and tagged as of different relevance) and thus a different point reduction is applied (e.g. one surface remains unreduced, whereas points of the other are discarded).

Thereby, key points 2k need not necessarily to be identical to initially generated scan points (real scanned points) but can be artificially generated points, computed based on real scan points, e.g. a point of gravity of a certain number or groups of scan points, which scan points itself are not permanently stored but only "their" key point 2k. In other words, a key point 2k can either be a selected scan point or an artificially generated point, representing a number of real scan points, which needs not to be identical to any original scan point.

Thereby, the degree of remaining detail may be in advance pre-defined by a user input, e.g. from a set of pre-attunements. As another option, the object type may be considered in the selection in that it the degree of shape preservation is dependent on the object type. For instance, for two objects of quite similar structure or surface shape but of different type, wherein one object type is considered or treated as more relevant than the other, more key points 2k are selected for the more relevant object than for the object of less relevance.

The point reduction as for example described with respect to figures 2, 4 and 5 can be adapted to key points. That is, any point 2s stored can be a key point 2k. Alternatively, the key point concept is used for only a part of the initial point cloud resp. only for some objects or object types whereas for other parts or object (types) the criterion of rough shape storage by key points 2k is not applied. Hence, either all kept or selected scan points are key points 2k (at least from object types to be stored with reduced point number) or only some permanently stored scan points are key points 2k and others not. Key points are in particular advantageous for a further development of the method as described with respect to following figures 7a,b and 8a,b.

Figure 7a is similar to figure 6b, indicated in a 2D-scheme key points 2k as scan points used for representing a rough shape of object 11, in the example a tree. The scan points finally or permanently stored of the tree 11 are (only) these key points 2k. Thus, the scanning data is reduced in that of all initally generated scan points of tree 11, only scan points in form of key points 2k are preserved (either directly by selection or indirectly by generation of artificial key points out of them) as the tree 11 is of an object type of minor relevance for the measurement task.

Typically some time after the scan has ended, the scanning data is transferred from the scanning device to a scanning software for processing of a point cloud, like scan registration, filtering, point cloud classification, etc. These processing steps are tuned to a high and homogeneous scanning resolution which due to the object type-specific reduction is not the case any more for the reduced point cloud. Above that, a point cloud with homogenous distribution, certain features or degree of detail is important for the visual appearance of the point cloud, too (in particular objects with strong point reduction or with only very rough shape conservation/few key points may appear unsightly, e.g. clunky), as well as for post-processing point cloud classification as known in the art wherein AI-based models are trained on these kind of features.

In the herewith exemplified further development of the inventive method, the method comprises an additional reconstruction step after scanning in which a dense and uniform or homogenous point cloud is re-established, based on the key points 2k. As illustrated in figure 7b, in this post-processing step, the reduced point cloud of tree 11 is filled with virtual scan points 2r such that a dense point cloud is established whereby the key points 2k -which as said represent a rough shape or outline of the object- serve as a template or "road map". Thereby, it is not important to produce an exact facsimile of the original object 11/shape 20 or the respective point cloud (and indeed impossible as due to the preceding data reduction this exact information is lost), but to produce a "look-alike" reconstruction or pseudo-reconstruction.

In other words, the key points 2k (so-to-say) provide a general construction plan (or "DNA") which "only" defines the basic shape, form, outline/plot or shell/carcass which shell is then covered or finalized with typical or object type or shape type -standard elements. The difference to the original structure/point cloud is illustrated in figure 7b in that the reconstructed shape indicated by the dotted surface deviates slightly form the original shape 20 indicated by solid outer line.

How detailed this general construction plan is, is optionally dependent on the type of object or shape described therewith, whereby it is noted that any scanned object or surface needs not to be classified according to object or shape classes/types in a strict or explicit manner but this object or shape type-dependency can also be woven into the generation of the construction plan/(key) point selection as a whole, e.g. as an integral part of a AI-algorithm or neural network which is trained on object or shape types.

In the reconstruction, for instance, an interpolation algorithm is applied to the measurements (horizontal angle, vertical angle, distance, intensity) or the computed 3d-coordinates (X, Y, Z) and intensity. This algorithm computes the points 2r that lie inbetween the stored key points 2k and can be based on a simple distance based interpolation algorithm. Alternatively, the interpolation can also be based on a machine learning algorithm, in particular a Neural Network, for a more sophisticated artificial point computation.

Figures 8a,b illustrate the post-scan reconstruction, too. Shown is a part or detail of tree 11, wherein figure 8a shows the original scan points 2 with one of them, namely key point 2k, being the one point to be stored. Figure 8b shows the virtual scan points 2r, which are established in post processing with key point 2k serving as anchor point. The shape given by the virtual/artificial scan points 2r is not congruent to the original shape 20 (indicated in the figure by the grey shape) but the artificial fine structure "only" imitates the original one more or less.

Therewith, the invention also covers a reconstruction step that retrieves a high resolution or dense point cloud based on the rough shape and features provided by the stored key points 2k. This means, that although the details in the geometry might change and differ to the true or original details, the point distribution that is typical for the object type is preserved. For instance, in buildings and man-made objects/shapes the structure is dominated by planar patches whereas a point cloud representing vegetation has a more noisy point distribution.

For taking these differences or typical object or shape properties into account, meta-information associated with a key point 2k is relied upon. For example, it is stored together with a respective key point 2k which type of object, e.g. vegetation, building, etc., or shape the key point 2k is taken from, and then, scan points 2r are virtually generated according to a pre-defined distribution and/or density that is typical for the respective object type respectively shape type. Thus, the reconstruction is object and/or shape type-specific.

In other words, particularly in case the classification network is based on multi-class segmentation and classifies the object type, e.g. building and vegetation, or shape type, the object class respectively shape type is stored with each key point 2k. The post-processing or reconstruction interpolation algorithm can then be specific to each object or shape class. In other words, for example a different interpolation would be applied e.g. to key points 2k for buildings and key points 2k for vegetation.

Other examples for such meta-information stored in relation to selected scan points and useful for reconstruction relate to (original) scan point density or distribution, either of the complete scan set or a subset, comprising the selected scan point(s), information relating to the object surface or information describing the neighborhood of points neighboring the selected scan point. Using this meta-information, virtual scan points can be computed around the key points serving as position true references or anchors which artificial scan points re-build an artificial scan point surrounding or inbetween filling of the key points as if there had been no scan point reduction.

Fig. 9 shows schematically an example for generation and storage of the aforementioned meta-information which is stored with the reduced scan point set and can be used for pseudo-replication of the original, unreduced scan point set. For a selected point or key point 2k, its surrounding 21, given by the other generated scan points 2, is evaluated, too. Hence, besides the classification selected-discarded or key point-no key point -and if appropriate a subsampling-, an embedding for each key point is produced, for example as an output of a neural network. As schematically indicated on the right side of figure 9, this embedding can be a vector 22 with typically 8 - 32 values that encode the shape of the original point cloud 2 in the surroundings of the key point 2k. Then during aforementiond reconstruction, the interpolation of the points 2k is based on this embedding vector 22.

The embedding vector 22 can be seen as some sort of non-lossless compression of the information given by the scan points 2 around key point 2k. This compressed information is used in the reconstruction step for rebuilding the point cloud in the adjacence of the according key point 2k in a more appropriate fashion than without having the information, whereby nevertheless the lost information is substituted with a surrogate that "only" mimics the original. This imitation by implementation of artificial scan points is tailored in such a way that a point cloud produced therewith has an appearance (point density, distribution, structure, etc.) which is similar to the original point cloud/scanning data.

It is apparent that these illustrated figures only schematically illustrate possible exemplary embodiments. The various approaches can also be combined with one another according to the invention and with measuring devices and measuring methods of the prior art if not indicated otherwise.

## Claims

1. Optoelectronic measuring device (1) having a scanning functionality for generating points (2) by scanning sampling of surfaces of objects (10, 11, 12), in particular a laser scanner or total station, having
• a radiation source, in particular a laser source, for generating measuring radiation,
• an optical unit for emitting measuring radiation of form of a measuring beam (103) into free space, whereby the emission direction of the measuring beam (103) is variable about at least one axis, in particular two axes perpendicular to one another,
• at least one position or angle sensor for measuring the emission direction,
• an optoelectronic detector for detecting reflected measuring radiation,
• a control and analysis unit designed for measuring a distance value for a respective scan point (2),
• whereby the control and analysis unit is designed for automatic scan point reduction of the number of generated scan points (2) by discarding of scan points (2d),
**characterized in that**
the automatic scan point reduction comprises an object type-specific and/or surface shape type-specific scan point reduction, whereby object type respectively surface shape type refers to the kind of object (10-12) respectively kind of shape (20), in particular whereby the number of scan points (2) remains unreduced for objects (10-12) and/or shape of a type not specified for scan point reduction.

2. Measuring device (1) according to Claim 1,
**characterized in that**
the control and analysis unit is designed for determination of scan points (2k) -denoted key points-based on the set of generated scan points of an object (10-12) of a type specified for scan point reduction which key points (2k) together sufficiently define a rough form of a scanned object (10-12).

3. Measuring device (1) according to any one of the preceding claims,
**characterized in that**
the control and analysis unit comprises information about object and/or shape classes for defining object types respectively shape types, whereby for each object and/or shape class it is defined if, and particularly to what extent, scan points (2) are to be reduced.

4. Measuring device (1) according to any one of the preceding claims,
**characterized in that**
the control and analysis unit is designed to determine object and/or shape type specific meta-information for a respective preserved scan point (2s) or a set of preserved scan points for a sampled object (11, 12) and/or shape (20) of a type specified for scan point reduction and to store the information together with the according scan point (2s) or set of scan points.

5. Measuring device (1) according to any one of the preceding claims,
**characterized in that**
the control and analysis unit executes the object and/or shape type-specific scan point reduction based on a machine learning algorithm, in particular based on a neural network (3), designed for the object and/or shape type-specific scan point reduction.

6. Measuring device (1) according to claim 5,
**characterized in that**
the machine learning algorithm is embodied as a neural network (3, 3') configured to consider for the reduction information about intensity of the detected measurement radiation and/or about the emission direction.

7. Method for automatic scan point reduction, wherein a number of scan points are generated optoelectronically by detection of a measuring beam (103), in particular of a laser scanner or total station (1), with which objects' surfaces are sampled point-by-point, the scan points representing spatial positions of sampled surface points, whereby the method comprises automatically reducing the generated number of scan points (2) during the optoelectronic scanning by discarding of scan points (2d),
**characterized in that**
the reduction of scan points (s) is object type-specific and/or surface shape type-specific, whereby object type respectively surface shape type refers to the kind of object (10-12) respectively kind of surface shape (20), in particular whereby the number of scan points remains unreduced for objects and/or shapes of a type not specified for scan point reduction.

8. Method according to claim 7,
**characterized in that**
the reduction is based solely on scanning data of the generated scan points (2).

9. Method according to claim 7 or 8,
**characterized by**
determining points (2k) -denoted key points- out of the generated scan points (2) of an object (10-12) of a type specified for scan point reduction which key points (2k) together define a rough shape, in particular whereby the key points are determined by a neural network (3, 3').

10. Method according to any one of claims 7 to 9,
**characterized by**
mapping distance and intensity value of generated scan points onto a raster image (M) depending on the horizontal and vertical angle, inputting the raster image (M) into a neural network (3, 3'), using the neural network (3, 3') for classifying pixels as store point element or discard point element and using the classified pixels as output of the neural network (3, 3') for subsequently classifying scan points (2) according to the respective pixel.

11. Method according to one of claims 7 to 9,
**characterized in that**
coordinate and intensity value of scan points (2) are directly input into a neural network (3, 3'), the neural network (3, 3') being configured to directly output scan points (2s) to be permanently stored, in particular wherein the neural network (3, 3') is based on an architecture for semantic segmentation applied to point clouds (4).

12. Method according to any one of claims 7 to 11,
**characterized in that**
for a respective scan point (2s) or a set of scan points to be permanently stored, meta-information is determined and stored, the information describing an
• original scan point density and/or distribution, and/or
• object type and/or object surface structure,
in particular whereby the meta-information is an embedding vector generated by a neural network (3, 3').

13. Method according to any one of claims 7 to 12,
**characterized in that**
for a respective scan point (2s) or a set of scan points to be permanently stored meta-information is determined and stored, the information describing the neighborhood of such a scan point (2s) or set of scan points and being derived from adjacent scan points including said discarded scan points (2d).

14. Method according to claim 9 and one of claims 12 and/or 13,
**characterized in that**
in a post-processing step, for an object (10-12) with reduced number of scan points, additional virtual scan points (2r) as substitutes for at least some of the discarded generated scan points (2d) are generated based on the key points (2k) and the meta-information in such a way that
• a point cloud with a uniform scan point density and/or distribution is (re-)established, and/or
• a virtual surface structure of the object (10-12) which the scan points (2s) represent is created, emulating a real surface structure of the object (10-12) or according object type,
in particular whereby the meta-information is an embedding vector (22) assigned to a key point (2k) and virtual scan points in the vicinity are generated based on the embedding vector (22).

15. Computer program, which is stored on a machine-readable carrier, or computer data signal having program code, for controlling and/or carrying out the method according to Claim 7, in particular when the program is executed in a control and analysis unit of a measuring device (1) according to Claim 1.
